# EUROPEAN PATENT APPLICATION

(11) **EP 1 231 038 A2**
(43) Date of publication of application: **14.08.2002**
(21) Application number: 01124667.5
(22) Date of filing: 16.10.2001
(51) Int. Cl.: B27M 3/04, B32B 21/13, B32B 5/08, E04F 15/04

(54) **Structure with multiple wood elements, particularly for flooring**

(30) Priority: 12.02.2001 IT MI010279
(71) Applicant: COSMO S.R.L., 67039 Sulmona (AQ) (IT)
(72) Inventor: Busacca, Fabio Giuggioli, 20144 Milano (IT)
(74) Representative: Petruzziello, Aldo

(57) **Abstract**

A structure with multiple wood elements is described, particularly for making wood floors, comprising an upper layer (2), whose fibres are disposed statistically lengthwise, glued to a base (3) made up of wood elements (A, B), whose fibres are crossed with each other and are oriented at right angles with respect to the fibres of said upper layer.

## Description

The present invention refers to a structure with multiple wood elements, with excellent characteristics of dimensional stability, particularly for making wood floors.

For many years now floors consisting of a plurality of superimposed layers of wood bonded to each other have taken their place alongside conventional solid wood floors.

As a general rule, these floors consist of an upper layer, visible and exposed to wear, joined to a base.

The upper layer can be of various sizes, and its thickness can vary from fractions of a millimetre to several millimetres.

Furthermore, it is obtained from the most diverse wood materials, according to the taste and needs of the user.

The base in turn can take various configurations.

In many cases it consists of a layer of solid wood of lower quality than that of the upper layer.

In others it consists of plywood or laminated wood, in others still of two or more layers of solid wood.

Embodiments also exist which make use of panels of wood fibre of the most diverse types as the base element, because the general principle that these wood floors set out to follow is that of using the most expensive material for the most noble use, that is the visual presentation and resistance to wear and damage deriving from being walked upon, and using less expensive materials for the supporting function, which is purely mechanical.

With the exception of floors which use as their base wood fibre elements or wood particle elements, which are not of any relevance for the purposes of this invention and which will be ignored hereinafter, all the others are characterized by the fact that the different layers of wood material have their fibres running crosswise to each other, in order to render the overall structure dimensionally more stable, and less subject to the natural expansion of the material of which it is formed.

In fact wood is subject to expansion due to changes in its moisture, which in turn depends upon the humidity of its environment.

Since wood is not an isotropic material, its dimensional variations change according to the direction of the fibres of which it is formed.

Therefore, a floor consisting of a plurality of layers, with their fibres running crosswise to each other is more stable than a solid floor because the deformations of the different layers occur to a different extent in space, compensating for each other and thus reducing their overall entity.

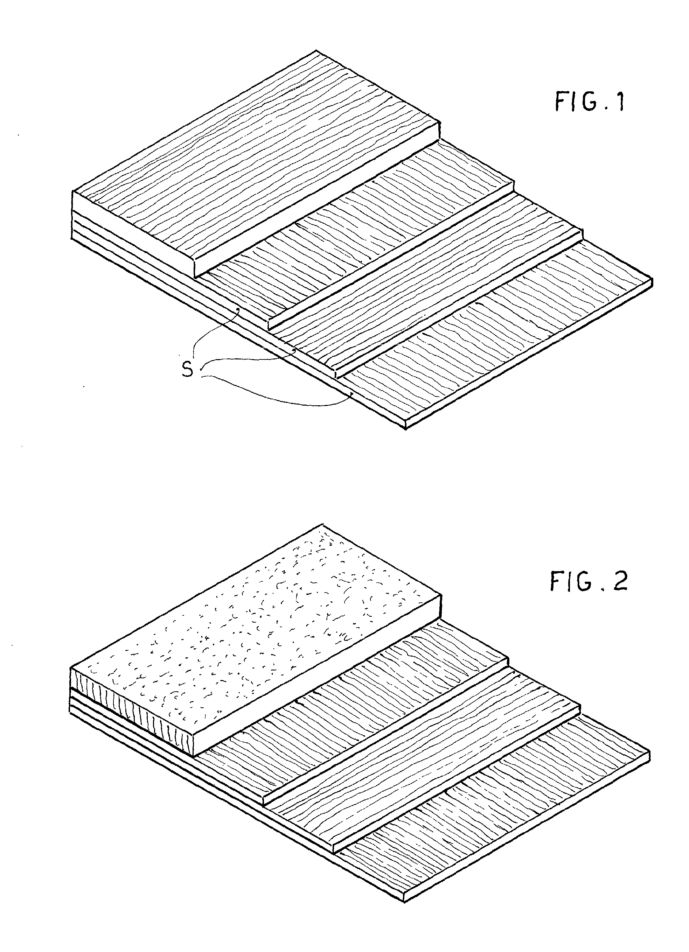

It should nevertheless be observed that in all the floors existing on the market, the fibres, though cross-directional, nevertheless lie on planes parallel to each other (Fig. 1).

The only exception to the present considerations are floors which have the upper layer "cross-cut", that is with the fibres cut crosswise with respect to their largest dimension (Fig. 2).

These floors with the "cross-cut" upper layer in turn do not form part of the subject matter of the present invention.

It must be specified that the concept of plane and of parallelism used in this context are not strictly geometrical, but statistical and morphological, and are intended to describe a situation well known to persons skilled in the art of wood processing.

An arrangement with cross-directional fibres on parallel planes as described above is typical, for example, of panels of laminated wood or plywood, and to an even greater extent is typical of wood floors which use plywood or laminated wood as the base material for the upper layer.

In this case the upper layer, the so-called noble layer, adheres directly to the main surface of the base.

The reason for this choice is the obvious structural simplicity, and the product obtained has acceptable characteristics of stability in many cases.

It should nevertheless be noted that floors of this type are not free of flaws and problems in their use.

The fact that they are glued or laid on a subfloor, subject to various types of stress, both due to the moisture in the subfloor and the variable atmospheric humidity to which they are exposed, creates considerable stresses therein, such as to cause deformations, fissures and in extreme cases separation of the different layers generically denoted by s in Figure 1 because of yielding of the adhesives.

In these cases the upper part of the floor separates from the rest, becoming totally or partially detached therefrom, and giving rise to so-called delamination.

The object of the invention is to propose a structure which, though being formed of different wood elements joined to one another, for example by gluing, does not present this drawback, or reduces the possibility and consequences thereof to a minimum.

This object is achieved by a structure according to the invention, which has the characteristics of appended claim 1.

Advantageous embodiments of the invention are apparent from the dependent claims.

Essentially, the proposed structure has the fibres of the different elements lying on planes perpendicular to each other, and more particularly base elements will have the fibres cross-directional or transverse to the fibres of other base elements, but on planes perpendicular to the plane of the fibres of the upper layer.

More in particular, the different elements have their fibres lying in space in the three orthogonal planes, that is oriented along the three axes of a Cartesian trihedron.

Further characteristics of the invention will be made clearer by the detailed description that follows, referring to purely exemplary and therefore non-limiting embodiment thereof, illustrated in the appended drawings in which:
Figure 1 is a diagrammatic axonometric view, in section and cut away, of a prior art structure, as previously described, in which the fibres of the upper layer are disposed on planes parallel to the planes of the fibres of the base layers;
Figure 2 is a view like Figure 1 of a second prior art structure, in which the upper layer is cross-cut;
Figure 3 is an axonometric diagrammatic sectional view of a wood structure with multiple elements according to the invention;
Figure 4 diagrammatically illustrates a way in which the structure of Figure 3 can be obtained.

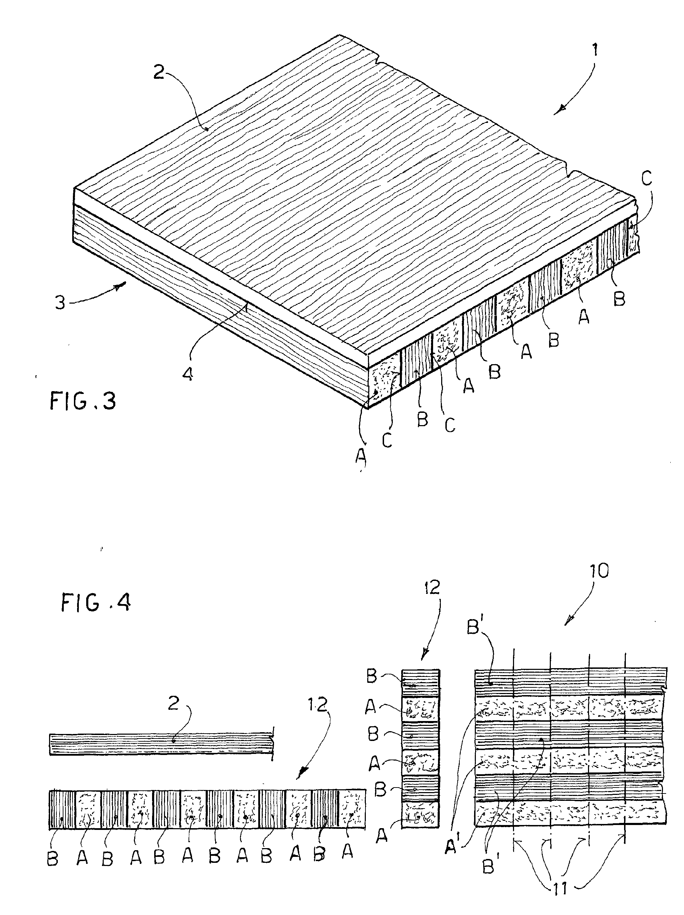

With reference to Figure 3, the numeral 1 denotes generally a structure with multiple wood elements according to the invention. Said structure is shown in the form of a strip, but it is clear that the structure 1 can have any shape.

The structure 1 is composed of an upper layer 2, which remains on view and exposed to wear in the formation of a flooring, and a underlying base layer 3, the layers 2 and 3 being joined to each other, for example by means of a layer of adhesive 4.

The upper layer 2, as can be seen in the figure, has on view statistically longitudinal wood fibres as a result of a tangential or radial cut, and not a crosswise cut, of the timber structure from which said layer is obtained.

According to the invention, the base layer 3 consists of a plurality of elements A, B, whose fibres are at right angles to each other and at right angles to the fibres of upper layer 2.

In particular, the elements A and B alternate with each other and are advantageously joined by means of respective layers of adhesive C. Nevertheless the invention also contemplates the case of the elements A, B being free from each other or joined in groups.

A structure is thus obtained in which the wood fibres of the upper layer 2 and of the elements A, B of the base 3 are disposed along three orthogonal planes, that is they are oriented along three orthogonal axes, a fact which improves the compensation between the expansion of the different wood elements 2, A, B, with respect to conventional structures.

In the structure according to the invention, any yielding of the bonding of the different elements A, B of the base 3 does not lead to detachment of the upper layer 2, thus reducing the risk of delamination to a minimum.

With reference to Figure 4, a simple method of obtaining the structure 1 according to the invention will now be described.

Starting from a plywood or laminate 10, in which a plurality of superimposed wood layers crossed with one another, denoted by A', B' alternate with each other, crosswise cuts 11 are made, so as to obtain blocks 12, each comprising a plurality of alternating elements A, B of the base 3 of the structure 1 which is to be formed.

These blocks 12 are turned 90°, as shown diagrammatically in Figure 4, and placed side by side, thus obtaining the base 3, on which the upper layer 2 is then applied, fixing taking place for example by means of adhesive.

## Claims

1. A structure with multiple wood elements, particularly for forming wood floors, comprising an upper layer (2) the wood fibres of which appear disposed in a statistically lengthwise manner, and a base (3), to which said upper layer (2) is fixed, **characterized in that** said base (3) comprises a plurality of wood elements (A, B), the fibres of an element being cross-directional to the fibres of another element and oriented at right angles with respect to the fibres of said upper layer (2).

2. A structure according to claim 1, **characterized in that** said wood elements (A, B) with cross-directional fibres of said base (3) are alternate with each other.

3. A structure according to claim 1 or 2, in which fixing of said upper layer (2) to the base (3), and possible fixing to each other said wood elements (A, B) of the base takes place by means of gluing.

4. A floor formed with a structure according to any one of claims 1 to 3.

5. A method for the production of a structure with multiple wood elements according to any one of claims 1 to 3, comprising the following steps:
- making transverse cuts (11) on a plywood or laminated wood comprising a plurality of laminar superimposed layers (A', B') with cross-directional fibres, so as to obtain blocks (12) comprising a plurality of elements (A, B) with cross-directional fibres;
- rotating said blocks (12) through 90° and placing said blocks side by side so as to arrange the surfaces generated by said transverse cuts (11) level, in order to obtain said base (3);
- joining to said base (3) the upper layer (2) with fibres disposed in a statistically lengthwise manner.

6. A method according to claim 5, **characterized in that** said joins between the upper layer (2) and the base (3) and possibly between single blocks (12) of the base (3) are obtained by means of gluing.
